# EUROPÄISCHE PATENTSCHRIFT

(11) **EP 3 909 118 B1**
(45) Veröffentlichungstag und Bekanntmachung des Hinweises auf die Patenterteilung: **12.11.2025**
(21) Anmeldenummer: 20706498.1
(22) Anmeldetag: 21.02.2020
(51) Int. Cl.: H02K 3/52, H02K 11/215, H02K 11/33, H02K 5/128, H02K 5/173

(54) **GRUNDKÖRPER FÜR EINEN ELEKTROMOTOR**
BASE BODY FOR AN ELECTRICAL MOTOR
CORPS DE BASE POUR UN MOTEUR ÉLECTRIQUE

(30) Priorität: 22.02.2019 DE 102019104557
(43) Veröffentlichungstag der Anmeldung: 17.11.2021
(73) Patentinhaber: Metabowerke GmbH, 72622 Nürtingen (DE)
(72) Erfinder: FLEISCHMANN, Bernd, 73235 Weilheim (DE); SCHMOHL, Michael, 72119 Ammerbuch (DE); BAUER, Stefan, 72644 Oberboihingen (DE); FLOETE, Enrico, 70599 Stuttgart (DE); HILLER, Matthias, 72657 Altenriet (DE); WIESNER, Bernd, 73277 Owen (DE); STENZEL, Thomas, 73760 Ostfildern (DE)
(74) Vertreter: Schmid, Wolfgang
(86) Internationale Anmeldenummer: PCT/EP2020/054660
(87) Internationale Veröffentlichungsnummer: WO 2020/169821

(56) Entgegenhaltungen:
- EP-A2- 1 422 809
- DE-A1- 102013 202 335
- DE-A1- 102015 110 624

## Beschreibung

Die Erfindung betrifft einen Grundkörper für einen Elektromotor sowie einen Elektromotor.

Ein gattungsgemäßer Grundkörper für einen Elektromotor ist aus der EP 1 422 809 A2 bekannt.

Die DE 10 2015 110 624 A1 beschreibt einen Stator für einen Elektromotor mit einem Statorkörper, der im montierten Zustand an jeder seiner Stirnseiten mit einem Deckel abgeschlossen ist, so dass er im montierten Zustand einen staubdichten Innenraum begrenzt.

Die DE 10 2013 202 335 A1 beschreibt eine elektrische Fluidpumpe mit einem permanenterregten Rotor eines Elektromotors.

Aus der DE 10 2007 020 534 A1 ist ein bürstenloser Elektromotor mit einem Stator und einem Rotor bekannt. Der Stator weist in an sich bekannter Weise ein Blechpaket auf, in dem der mit Permanentmagneten bestückte Rotor rotieren kann.

Aus der DE 10 2011 088 518 A1 ist ein Stator für einen Elektromotor und ein Verfahren zur Herstellung eines solchen Stators bekannt. Dabei ist der Stator aus zwei miteinander verbundenen Statorhälften gebildet.

Solche mit permanentmagnetbestückten Rotoren ausgestatteten, bürstenlosen Elektromotoren finden immer häufiger auch in Elektrohandwerkzeugmaschinen Verwendung. Da die unterschiedlichen Arten von Elektrohandwerkzeugmaschinen vollkommen unterschiedliche Anforderungen an einen Elektromotor stellen, ist es nicht möglich bzw. zumindest nicht sinnvoll, ein und denselben Elektromotor für unterschiedliche Arten von Elektrohandwerkzeugmaschinen zu verwenden. Dies hat in der Vergangenheit zu einer Vielzahl vollkommen unterschiedlicher Elektromotoren geführt, was nicht nur die Herstellungs-, sondern auch die Entwicklungskosten für diese Elektromotoren wesentlich erhöht.

Es ist Aufgabe der vorliegenden Erfindung, einen Grundkörper für einen Elektromotor zu schaffen, der bei unterschiedlich ausgestatteten und für unterschiedliche Zwecke eingesetzten Elektromotoren gleichermaßen verwendet werden kann.

Erfindungsgemäß wird diese Aufgabe durch die in Anspruch 1 genannten Merkmale gelöst.

Der erfindungsgemäße Grundkörper ist in der Art eines Baukastens ausgeführt und lässt sich aufgrund seiner Vielzahl von Merkmalen, die an die unterschiedlichsten an einen Elektromotor gestellten Anforderungen angepasst sind, für die unterschiedlichsten Verwendungszwecke einsetzen.

Dabei bildet die Außenwandung einen Rotorraum, in dem der Rotor des Elektromotors aufgenommen werden kann. Gleichzeitig dient die Außenwandung dazu, an ihrer Außenseite eine Wicklung aufzunehmen, sowie zur Halterung eines einen Teil des Stators bildenden Blechpakets. Das Blechpaket ist vorzugsweise mit dem Material der Außenwandung umspritzt und somit in dieselbe integriert. Bezüglich der Verschaltung der Wicklung lässt sich sowohl eine Stern- als auch eine Dreiecksschaltung und auch jede beliebige andere Verschaltung problemlos realisieren. Dasselbe gilt auch für die Kommutierung des mit dem Grundkörper ausgestatteten Elektromotors, die in an sich bekannter Weise als eine Blockkommutierung, eine Sinuskommutierung, eine FOC bzw. feldorientierte Regelung oder als eine andere bekannte Kommutierungsart ausgeführt sein kann. Gerade mit einer feldorientierten Regelung lässt sich der Wirkungsgrad des mit dem erfindungsgemäßen Grundkörper ausgestatteten Elektromotors zum Teil erheblich erhöhen.

An den Rotorraum schließt sich erfindungsgemäß ein Aufnahmeraum an, in dem eine Leiterplatte oder ein anderes Bauteil des Elektromotors aufgenommen werden kann. Selbstverständlich ist es nur möglich und nicht unbedingt erforderlich, in dem Aufnahmeraum eine Leiterplatte oder ein anderes Bauteil des Elektromotors aufzunehmen, weshalb der Grundkörper, wie oben angegeben, für die unterschiedlichsten Ausführungen von Elektromotoren eingesetzt werden kann.

Der Aufnahmeraum wird mittels einer Trennwand von dem Rotorraum abgetrennt. Die Trennwand stellt dabei eine Entkopplung der in dem Aufnahmeraum aufnehmbaren Leiterplatte gegenüber dem Rotor, insbesondere gegenüber den auf demselben angeordneten Permanentmagneten, dar. Auf diese Weise ist die Leiterplatte vor elektrostatischen Spannungen bzw. elektrostatischer Aufladung geschützt. Durch die sich innerhalb des Aufnahmeraums befindende Ausrichteinrichtung kann dabei die Lage der Leiterplatte oder des anderen Bauteils, das in dem Aufnahmeraum aufgenommen ist, ausgerichtet werden.

Falls es bei bestimmten Anwendungen, beispielsweise bei Elektrohandwerkzeuggeräten, die einer starken Verschmutzung ausgesetzt sind, erforderlich ist, den Rotorraum zu kapseln, kann an der erfindungsgemäßen, sich auf der der Trennwand gegenüberliegenden Seite des Rotorraums an der Außenwandung befindenden Aufnahme für einen Deckel ein ebensolcher Deckel angebracht werden, um eine Verschmutzung und möglicherweise eine Beschädigung des Elektromotors zu verhindern.

Schließlich ermöglicht die sich an die Trennwand anschließende Innenwandung die Aufnahme eines Lagers, um eine geeignete Lagerung des Rotors bzw. der Rotorwelle an dem Grundkörper zu ermöglichen.

Der erfindungsgemäße Grundkörper lässt sich somit universell für die unterschiedlichsten Arten und Bauformen von Elektromotoren verwenden, wobei er speziell an die jeweiligen Anforderungen angepasst werden kann. Ein besonderer Vorteil der erfindungsgemäßen Lösung besteht in deren hoher Flexibilität, da der Grundkörper durch unterschiedliche, aufeinanderfolgende Verfahrensschritte, hergestellt werden kann, wobei je nach der gewünschten Ausführung des den Grundkörper aufweisenden Elektromotors bestimmte Verfahrensschritte weggelassen und andere vorgenommen werden können.

Dadurch, dass der Aufnahmeraum durch eine umlaufende Vertiefung zwischen der Außenwandung und der Innenwandung gebildet ist und zur Aufnahme von Anschlussdrähten für eine Verschaltung der Wicklung dient, ergibt sich ein sehr guter Schutz für diese Anschlussdrähte.

In einer sehr vorteilhaften Weiterbildung der Erfindung kann vorgesehen sein, dass die Trennwand eine Öffnung zur Durchführung einer Rotorwelle aufweist. Dadurch kann die mit dem Rotor verbundene Rotorwelle auf sehr einfache Weise in dem Grundkörper aufgenommen und gegebenenfalls an demselben gelagert werden.

In einer weiteren sehr vorteilhaften Weiterbildung der Erfindung kann vorgesehen sein, dass das Blechpaket mehrere von der Außenwandung nach außen überstehende Zähne bildet, an denen die Wicklung aufnehmbar ist. Durch die von der Außenwandung nach außen überstehenden Zähne des Blechpakets kann die Wicklung auf sehr einfache Weise an dem Grundkörper angebracht werden, sodass der den erfindungsgemäßen Grundkörper aufweisende Elektromotor sehr kostengünstig gefertigt werden kann.

Um die Positionierung des Rotors innerhalb des Grundkörpers zu vereinfachen, kann in einer weiteren vorteilhaften Ausgestaltung der Erfindung vorgesehen sein, dass die Öffnung zur Durchführung des Rotors in der Trennwand einen unrunden Querschnitt aufweist.

Wenn in einer weiteren vorteilhaften Ausgestaltung der Erfindung auf der Trennwand wenigstens zwei Stege zur Abstützung der Leiterplatte oder des anderen Bauteils des Elektromotors angeordnet sind, so kann die Leiterplatte oder ein anderes Bauteil sicher auf dem Grundkörper abgestützt werden. Die Stege sorgen zusätzlich für einen Toleranzausgleich sowie für eine Beabstandung der Leiterplatte von der Trennwand, sodass auf beiden Seiten der Leiterplatte elektronische Bauelemente angebracht werden können.

Eine sehr einfache Lageausrichtung der Leiterplatte oder des anderen Bauteils des Elektromotors ergibt sich, wenn die wenigstens eine Ausrichteinrichtung wenigstens einen, auf wenigstens einem der Stege angeordneten Vorsprung zum Eingriff in eine Öffnung der Leiterplatte oder des anderen Bauteils des Elektromotors aufweist.

Um die Wicklung an den gewünschten Positionen anordnen zu können, kann des Weiteren vorgesehen sein, dass die Außenwandung mehrere Aussparungen zur Durchführung der Wicklung aufweist.

Die Fertigung des Grundkörpers kann erheblich vereinfacht werden, wenn die Aufnahme für den den Rotorraum verschließenden Deckel als umlaufende Aussparung am inneren Umfang der Außenwandung ausgebildet ist.

Um einen gegebenenfalls vorgesehenen, den Rotorraum verschließenden Deckel exakt ausrichten zu können, kann des Weiteren vorgesehen sein, dass die Aufnahme für den den Rotorraum verschließenden Deckel wenigstens einen Schlitz zur Lageausrichtung des Deckels aufweist.

Um eine einfache Unterbringung eines Lagegebers zur Bestimmung der Winkelposition des Rotors zu ermöglichen, kann des Weiteren auf der dem Rotorraum abgewandten Seite der Trennwand eine axiale Erweiterung für einen Lagegeber vorgesehen sein.

In Anspruch 11 ist ein Elektromotor mit einem Rotor, einer Wicklung und einem erfindungsgemäßen Grundkörper angegeben.

Ein solcher Elektromotor kann sehr universell und insbesondere für die unterschiedlichsten Elektrohandwerkzeuggeräte eingesetzt werden, indem er mit den jeweils erforderlichen bzw. gewünschten Bauteilen bzw. Elementen ausgestattet wird. Insbesondere kann der Elektromotor sowohl vom Netz als auch von einem Akku gespeist werden, wobei in beiden Fällen die zur Isolierung erforderlichen Sicherheitsabstände auch für Hochspannungsanwendungen eingehalten werden können. Des Weiteren kann der Elektromotor über das Stromnetz oder mittels einer Batterie bzw. eines Akkus mit Strom versorgt werden. Außerdem ist es vorteilhafterweise möglich, den Elektromotor mit den unterschiedlichsten elektronischen Steuerungen und/oder Regelungen zu betreiben.

In einer vorteilhaften Weiterbildung des Elektromotors kann vorgesehen sein, dass der wenigstens eine Vorsprung zur Befestigung der Leiterplatte oder des anderen Bauteils des Elektromotors heißverstemmt ist. Dies stellt eine sehr einfache Möglichkeit zur Fixierung der Leiterplatte oder eines anderen Bauteils des Elektromotors dar.

Eine gleichermaßen einfache wie unempfindliche elektrische Verbindung der Wicklung mit einer Steuerung des Elektromotors ergibt sich, wenn für eine Verschaltung der Wicklung dienende Anschlussdrähte über jeweilige Steckerterminals in einem Steckergehäuse aufgenommen sind, wobei das Steckergehäuse mit einer Steckeraufnahme verbindbar ist.

Wenn dabei das Steckergehäuse mittels einer Schnappverbindung mit der Steckeraufnahme verbindbar ist, so ergibt sich eine sehr einfache Montage dieser Bauteile miteinander.

Ergänzend sei darauf hingewiesen, dass Begriffe, wie "umfassend", "aufweisen" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus und umgekehrt.

Weitere Merkmale und Vorteile der Erfindung ergeben sich aus der nachfolgenden Beschreibung eines Ausführungsbeispiels der Erfindung. Die Figuren zeigen mehrere Merkmale der Erfindung in Kombination miteinander. Selbstverständlich vermag der Fachmann diese jedoch auch losgelöst voneinander zu betrachten und gegebenenfalls zu weiteren sinnvollen Unterkombinationen zu kombinieren, ohne dass hierfür erfinderisch tätig werden zu müssen.

Es zeigen schematisch:
- Figur 1: eine Draufsicht auf einen erfindungsgemäßen Grundkörper für einen Elektromotor;
- Figur 2: eine Ansicht des Grundkörpers gemäß dem Pfeil II aus Figur 1;
- Figur 3: eine Ansicht des Grundkörpers gemäß dem Pfeil III aus Figur 2;
- Figur 4: eine perspektivische Ansicht eines erfindungsgemäßen Elektromotors mit einem Rotor, einer Wicklung und einem erfindungsgemäßen Grundkörper;
- Figur 5: eine weitere perspektivische Ansicht des Elektromotors aus Figur 4;
- Figur 6: eine Seitenansicht des Elektromotors gemäß der Figuren 4 und 5;
- Figur 7: eine Ansicht des Elektromotors gemäß dem Pfeil VII aus Figur 6;
- Figur 8: eine Ansicht des Elektromotors gemäß dem Pfeil VIII aus Figur 6;
- Figur 9: einen Schnitt durch den Elektromotor gemäß der Linie IX-IX aus Figur 6;
- Figur 10: einen Schnitt durch den Elektromotor gemäß der Linie X-X aus Figur 6;
- Figur 11: eine Seitenansicht einer weiteren Ausführungsform des erfindungsgemäßen Grundkörpers für den Elektromotor;
- Figur 12: eine Ansicht gemäß dem Pfeil XII aus Figur 11;
- Figur 13: eine perspektivische Ansicht des Grundkörpers der Figuren 11 und 12;
- Figur 14: einen Schnitt nach der Linie XIV-XIV aus Figur 12;
- Figur 15: eine weitere Darstellung des Grundkörpers gemäß den Figuren 11 bis 14;
- Figur 16: einen Teil eines Elektromotors mit dem Grundkörper aus Figur 15;
- Figur 17: den Teil des Elektromotors aus Figur 16 mit weiteren Anbauteilen;
- Figur 18: eine weitere Ausführungsform des erfindungsgemäßen Elektromotors;
- Figur 19: eine Ansicht eines mit dem Elektromotor aus Figur 18 verbindbaren Bauteils; und
- Figur 20: eine weitere Ansicht des Elektromotors aus Figur 18 und des Bauteils aus Figur 19.

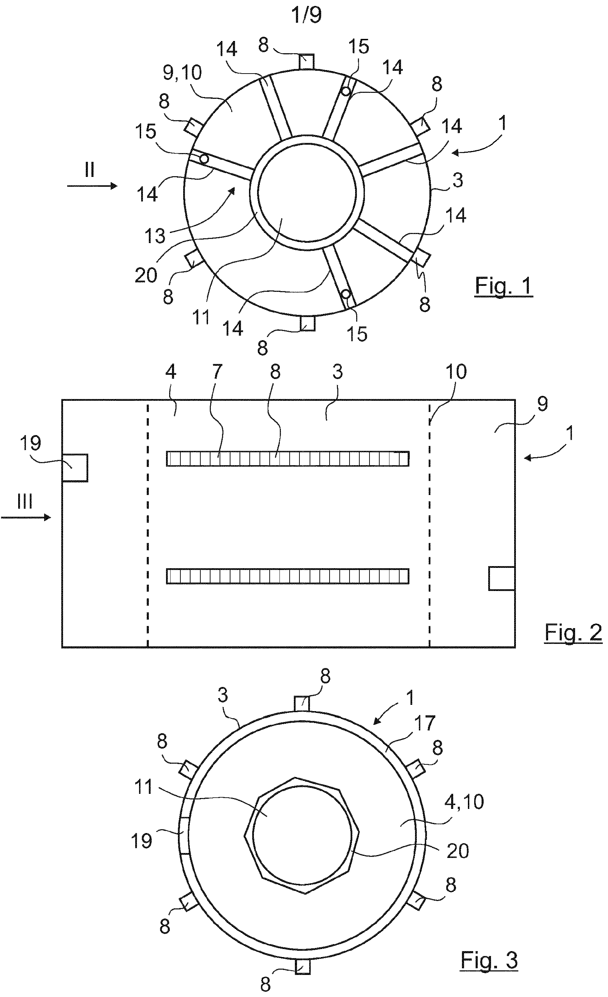

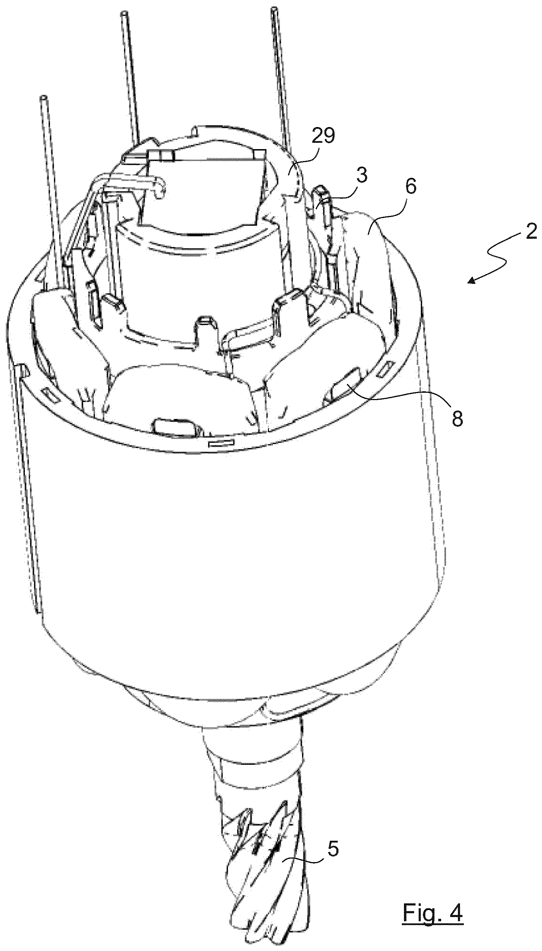

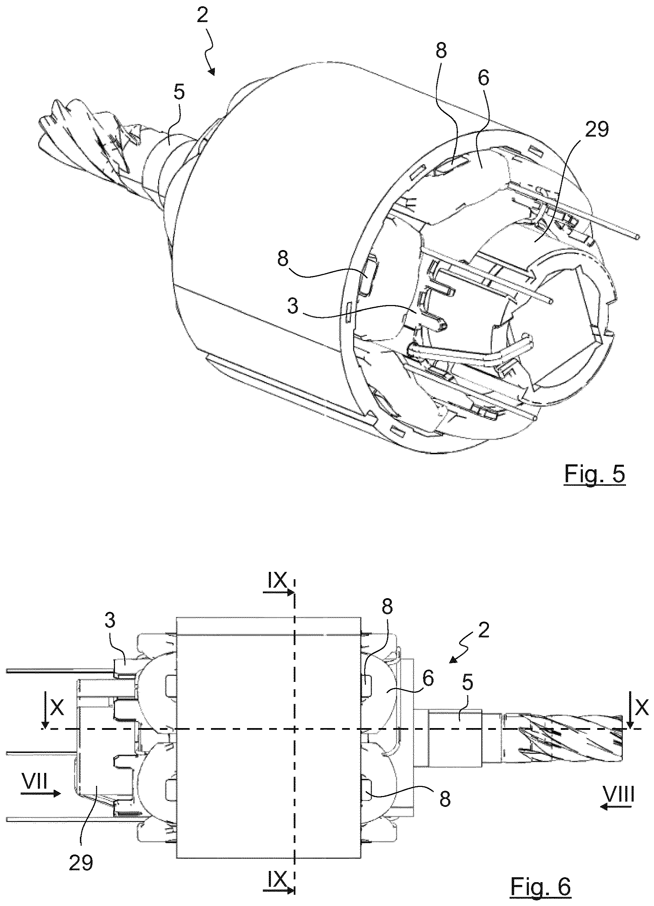

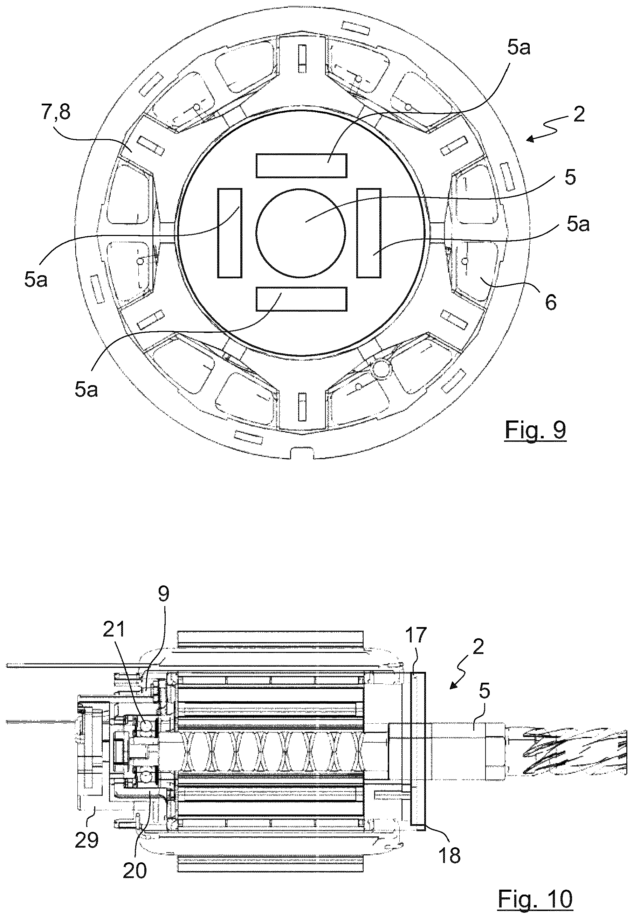

Die Figuren 1, 2 und 3 zeigen eine sehr schematische Darstellung eines Grundkörpers 1 für einen in den Figuren 4 bis 11 detaillierter dargestellten Elektromotor 2. Der Elektromotor 2 ist insbesondere für den Einsatz in einem Elektrohandwerkzeuggerät, beispielsweise einem Winkelschleifer, einer Bohrmaschine, einer Säge oder einem anderen Elektrohandwerkzeuggerät, vorgesehen. Um den Grundkörper 1 bei Elektromotoren 2 für die unterschiedlichsten Anwendungszwecke einsetzen zu können, ist derselbe, wie nachfolgend ausführlich beschrieben, sehr universell ausgeführt.

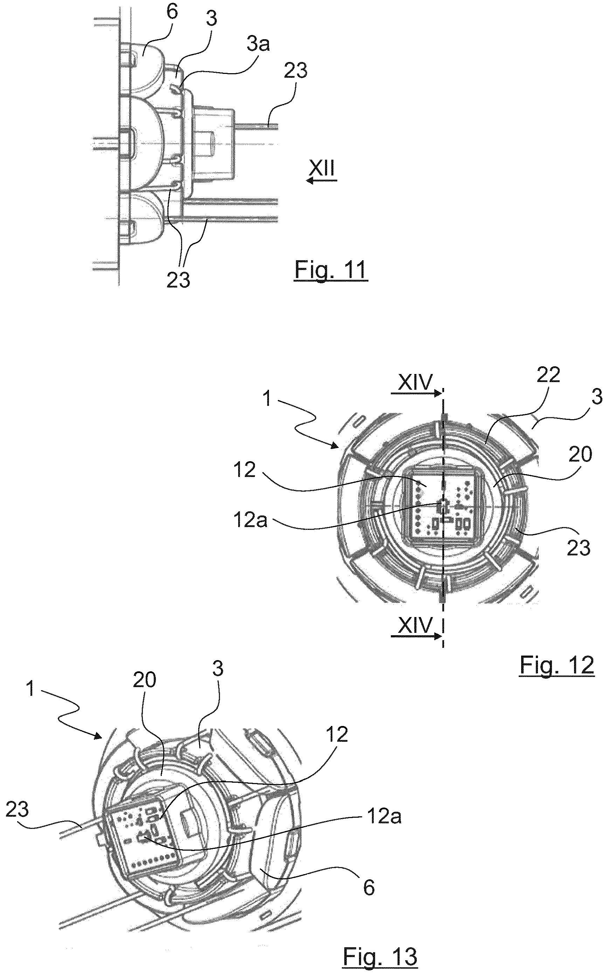

Der Grundkörper 1 weist eine im Wesentlichen zylindrische Außenwandung 3 auf, die einen Rotorraum 4 zur Aufnahme eines beispielsweise in Figur 4 dargestellten Rotors 5 des Elektromotors 2 bildet. Der Elektromotor 2 ist als bürstenloser Elektromotor ausgeführt, bei dem der Rotor 5 mehrere Permanentmagnete 5a aufweist bzw. mit den Permanentmagneten 5a bestückt ist. Der Rotor 5, der in an sich bekannter Weise eine Rotorwelle 5b aufweist, ist dabei, wie beispielsweise in dem Schnitt von Figur 11 deutlich zu erkennen, zumindest teilweise innerhalb des Rotorraums 4 bzw. innerhalb der Außenwandung 3 angeordnet.

An der Außenwandung 3 ist des Weiteren eine beispielsweise in Figur 4 dargestellte Spule bzw. Wicklung 6 zumindest teilweise außerhalb der Außenwandung 3 anbringbar. Die Außenwandung 3 dient außerdem zur Halterung eines Blechpakets 7, das in an sich bekannter Weise aus einer Vielzahl von übereinander gestapelten einzelnen Blechen gebildet ist. Im vorliegenden Fall wird das Blechpaket 7 mit dem Material der Außenwandung 3, vorzugsweise einem geeigneten Kunststoffmaterial, umspritzt und auf diese Weise in die Außenwandung 3 und damit in den Grundkörper 1 integriert. Mit der Wicklung bzw. den Wicklungen 6 und dem Blechpaket 7 bildet der Grundkörper 1 einen Stator für den Elektromotor 2. Die sich durch die Bestromung der Wicklung 6 ergebende Wirkung, nämlich die Rotation des Rotors 5 innerhalb der Wicklung 6 bzw. innerhalb des Stators, ist an sich bekannt und wird daher hierin nicht näher beschrieben.

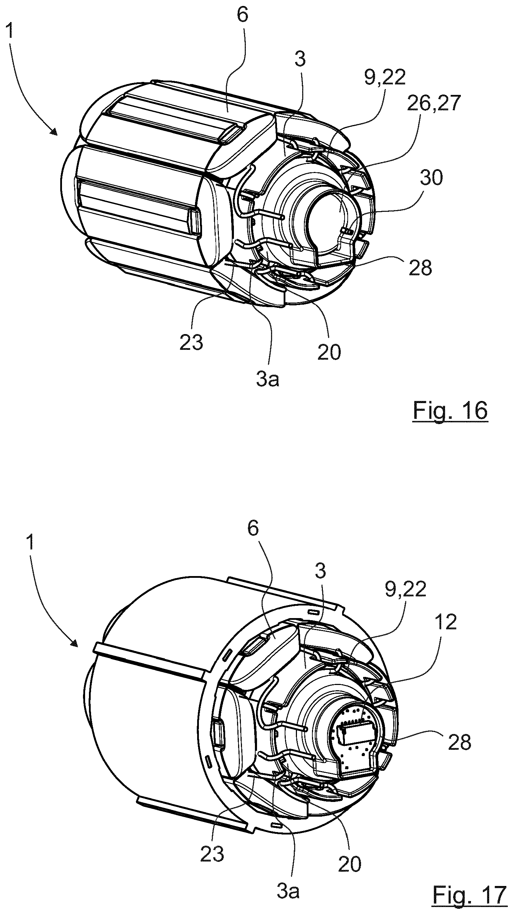

In Figur 2 ist zu erkennen, dass das Blechpaket 7 mehrere, im vorliegenden Fall sechs von der Außenwandung 3 nach außen überstehende Zähne 8 bildet, an denen die Wicklung 6 aufgenommen werden kann. Dabei verläuft vorzugsweise um jeden Zahn 8 eine der Wicklungen 6. Die Wicklung 6 kann beispielsweise auf einem nicht dargestellten, eindimensional angeordneten Trägerelement aufgewickelt werden. Zum Anbringen der Wicklung 6 an dem Grundkörper 1 kann dieses Trägerelement dann verformt werden, um die dreidimensionale Kontur der Wicklung 6 zu erzeugen. Hierzu kann das Trägerelement beispielsweise Gelenke oder dergleichen aufweisen. Die das Blechpaket 7 bildenden Bleche sind dabei im Wesentlichen ringförmig ausgebildet, wobei jedes der einzelnen Bleche an seinem äußeren Umfang die insgesamt sechs Zähne 8 aufweist. Die Außenwandung 3 weist außerdem mehrere Aussparungen 3a auf, die zur Durchführung der Wicklung 6 bzw. einer in den Figuren 12 bis 14 und 16 bis 20 dargestellten Verschaltung für die Wicklung 6 dienen.

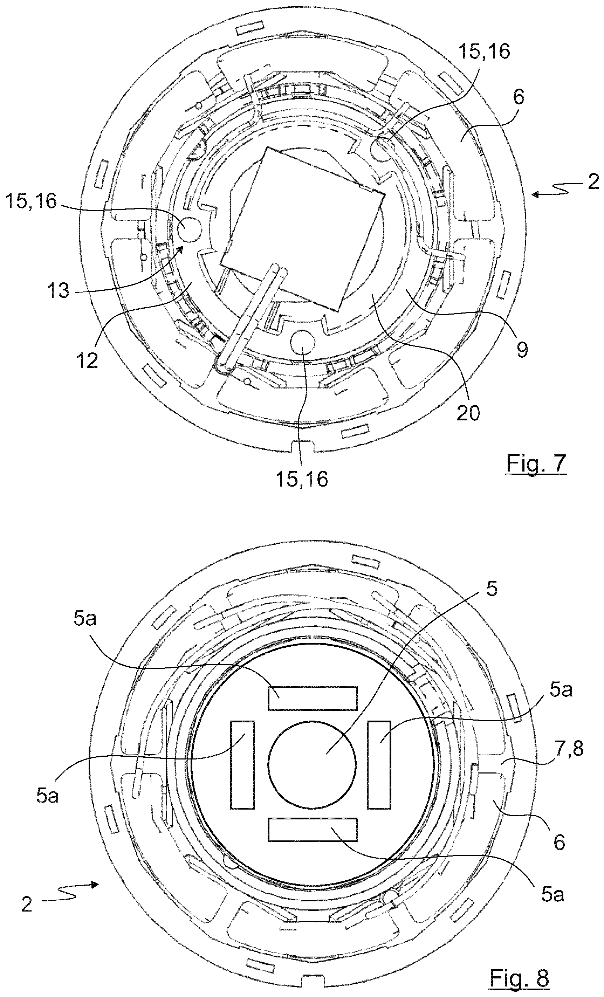

An den Rotorraum 4 schließt sich ein Aufnahmeraum 9 an, der mittels einer durch eine Planfläche gebildeten Trennwand 10, die eine Öffnung 11 zur Durchführung des Rotors 5 aufweist, von dem Rotorraum 4 abgetrennt ist. Mit Ausnahme der zur Durchführung des Rotors 5 bzw. der Rotorwelle 5b dienenden Öffnung 11 ist die Trennwand 10 vollständig geschlossen und dichtet damit den Rotorraum 4 ab. Gegebenenfalls kann in diesem Bereich auch ein zusätzliches Dichtungselement eingesetzt werden. Der Aufnahmeraum 9 dient zur Aufnahme einer beispielsweise in Figur 7 dargestellten, ringförmigen Leiterplatte 12, an der die unterschiedlichsten, zur Steuerung des Elektromotors 2 dienenden elektronischen Bauteile angebracht sein können. Die Leiterplatte 12 weist vorzugsweise einen beispielsweise in den Figuren 12 und 13 dargestellten Sensor 12a, insbesondere einen im Falle einer Blockkommutierung des Elektromotors 2 eingesetzten Hallsensor bzw. eine Hall-PCBA, auf bzw. ist mit demselben bestückt. Ein derartiger Sensor 12a kann beispielsweise dazu dienen, die Lage des Rotors 5 so exakt wie möglich zu ermitteln. Hierzu kann er mit entsprechenden auf dem Rotor 5 angeordneten Magneten zusammenwirken. Es ist jedoch auch möglich, beispielsweise Temperatursensoren einzusetzen. Statt der Leiterplatte 12 kann in dem Aufnahmeraum 9 auch ein anderes, nicht näher dargestelltes Bauteil des Elektromotors 2 aufgenommen sein. Dieses Bauteil kann ebenfalls zur Aufnahme bzw. Halterung eines Sensors für den Elektromotor 2 vorgesehen sein. Die oben erwähnten Aussparungen 3a in der Außenwandung 3 befinden sich in demjenigen Bereich der Außenwandung 3, welche den Aufnahmeraum 9 umgibt. Oberhalb der Leiterplatte 12, d.h. auf der der Trennwand 10 abgewandten Seite der Leiterplatte 12, kann sich eine in den Figuren 12, 13 und 14 dargestellte Verschaltung für die Wicklung 6 befinden. Hierzu weist die Außenwandung 3 in diesem Bereich eine entsprechende Länge auf, d.h. der Aufnahmeraum 9 ist tief genug, um sowohl die Leiterplatte 12 als auch die Verschaltung für die Wicklung 6 aufzunehmen.

Auf der Trennwand 10 befindet sich eine Ausrichteinrichtung 13, die zur Lageausrichtung der Winkellage der Leiterplatte 12 oder des erwähnten anderen Bauteils des Elektromotors 2 innerhalb des Aufnahmeraums 9 und somit gegenüber der Wicklung 6 bzw. dem Rotor 5 dient. Des Weiteren sind auf der Trennwand 10 wenigstens zwei, im vorliegenden Fall insgesamt sechs Stege 14 zur Abstützung der Leiterplatte 12 oder des anderen Bauteils des Elektromotors 2 angeordnet. Die Leiterplatte 12 liegt in ihrem montierten Zustand auf den Stegen 14 auf, sodass auch sich auf der Unterseite der Leiterplatte 12 befindende Bauteile von der Trennwand 10 beabstandet sind. Selbstverständlich kann auch eine vollkommen andere Anzahl an Stegen 14 vorgesehen sein. Die Höhe der Stege 14 kann so gewählt werden, dass ich ein gewünschter Abstand der Leiterplatte 12 von dem sich auf der anderen Seite der Trennwand 10 befindenden Rotor 5 eingestellt werden kann, um eine ausreichende Kopplung zwischen eventuellen, sich auf der Leiterplatte 12 befindenden Sensoren und dem Rotor 5 und damit eine korrekte Funktion dieser Sensoren zu gewährleisten.

Die Ausrichteinrichtung 13 weist wenigstens einen, im vorliegenden Fall drei auf wenigstens einem der Stege 14, im vorliegenden Fall auf drei unterschiedlichen Stegen 14, angeordnete Vorsprünge 15 zum Eingriff in eine Bohrung 16 der Leiterplatte 12 oder des anderen Bauteils des Elektromotors 2 auf. Zur Befestigung bzw. Fixierung der Leiterplatte 12 an dem Grundkörper 1 kann der wenigstens eine Vorsprung 15 bzw. können die mehreren Vorsprünge 15 nach dem Anordnen der Leiterplatte 12 innerhalb des Aufnahmeraums 9 heißverstemmt werden.

Auf der der Trennwand 10 gegenüberliegenden Seite des Rotorraums 4 ist außerdem eine Aufnahme 17 vorgesehen, die zur Aufnahme eines den Rotorraum 4 verschließenden und somit vor dem Eindringen von Staub oder anderen Verschmutzungen schützenden Deckels 18 dient. Dabei ist die Aufnahme 17 für den den Rotorraum 4 verschließenden Deckel 18 als umlaufende Aussparung am inneren Umfang der Außenwandung 3 ausgebildet. Die Aufnahme 17 für den Deckel 18 ist somit auf der den Aussparungen 3a gegenüberliegenden Seite des Grundkörpers 1 vorgesehen. Zusätzlich weist die Aufnahme 17 für den Deckel 18 wenigstens einen Schlitz 19 zur Lageausrichtung des Deckels 18 auf, in den ein nicht dargestellter Vorsprung des Deckels 18 eingreifen kann. Der Deckel 18 kann außerdem zur Aufnahme eines nicht dargestellten Lagers zur Lagerung der Rotors 5 dienen.

An die Trennwand 10 schließt sich eine im wesentlichen zylindrische Innenwandung 20 an, die zur Aufnahme eines Lagers 21 für den Rotor 5 dient und zusammen mit der Außenwandung 3 den Aufnahmeraum 9 erzeugt. Das Lager 21 kann auf den Rotor 5 aufgepresst sein.

Gleichzeitig bildet die Innenwandung 20 eine Zentrierung für die Leiterplatte 12. Die Öffnung 11 zur Durchführung des Rotors 5, die sich in der Trennwand 10 befindet und die von der Innenwandung 20 umgeben ist, weist einen unrunden Querschnitt, im vorliegenden einen Achtkant, auf.

Die Außenwandung 1, die Trennwand 10, die Stege 14, die Vorsprünge 15 und die Innenwandung 20 des Grundkörpers 1 bestehen vorzugsweise aus einem geeigneten Kunststoffmaterial und können mittels Spritzgießen hergestellt werden. Der Grundkörper 1 kann daher und aufgrund seiner Form auch als umspritzter Zahnstern bezeichnet werden. Vorzugsweise sind die Außenwandung 1, die Trennwand 10, die Stege 14, die Vorsprünge 15 und die Innenwandung 20 dabei einteilig miteinander ausgeführt und werden insbesondere mittels eines einzigen Spritzgießverfahrens hergestellt. Aufgrund der beschriebenen, sehr universellen Ausführung des Grundkörpers 1 ist dabei im Prinzip nur ein einziges Spritzgießwerkzeug erforderlich. Durch den oben beschriebenen unrunden Querschnitt der Öffnung 11 kann dieses Spritzgießwerkzeug in dem die Öffnung 11 erzeugenden Bereich sehr exakt ausgeführt werden, wodurch eine ebenso exakte, mittige Positionierung des Rotors 5 innerhalb der Öffnung 11 möglich ist. Durch das Anspritzen der das Lager 21 für den Rotor 5 aufnehmenden Innenwandung 20 an die Trennwand 10 wird eine sehr einfache Abdichtung in diesem Bereich, u.a. eine gute Abdichtung des Rotorraums 4, erreicht, ohne dass ein zusätzlicher Deckel, eine Vergussmasse oder ähnliches benötigt werden.

In den Figuren 11 bis 17 ist eine weitere Ausführungsform der Erfindung des Grundkörpers 1 bzw. des damit ausgestatteten Elektromotors 2 dargestellt, die in weiten Teilen mit der zuvor beschriebenen Ausführungsform übereinstimmt. Dabei ist erkennbar, dass der Aufnahmeraum 9 durch eine umlaufende Vertiefung 22 zwischen der Außenwandung 3 und der Innenwandung 20 gebildet ist. Die umlaufende Vertiefung 22 entspricht somit dem Aufnahmeraum 9. Die umlaufende Vertiefung 22 dient zur Aufnahme von Anschlussdrähten 23, die wiederum für eine Verschaltung der Wicklung 6 eingesetzt werden können. Dadurch können die Anschlussdrähte 23 sicher verlegt und vor Abrasion geschützt werden. Die Anschlussdrähte 23 können nach dem Verschalten der Wicklung 6 mit einer nicht dargestellten Vergussmasse vergossen werden. Die Anschlussdrähte 23 verlaufen dabei durch die Aussparungen 3a, die in der Außenwandung 3 vorgesehen sind. Des Weiteren kann durch diese Unterbringung auf zusätzliche Halteeinrichtungen zum Halten der Anschlussdrähte 23 verzichtet werden. Die Vertiefung 22 bzw. in diesem Fall der Aufnahmeraum 9 zwischen der Außenwandung 3 und der Innenwandung 20 kann auch als Labyrinth bezeichnet werden, da sie das Eindringen von Schmutz und dergleichen in den Bereich, in dem sich die Anschlussdrähte 23 für die Wicklung 6 befinden, verhindert. Grundsätzlich kann die Wicklung 6 mittels einer Stern- oder einer Dreiecksschaltung oder jeder anderen Verschaltung verschaltet werden.

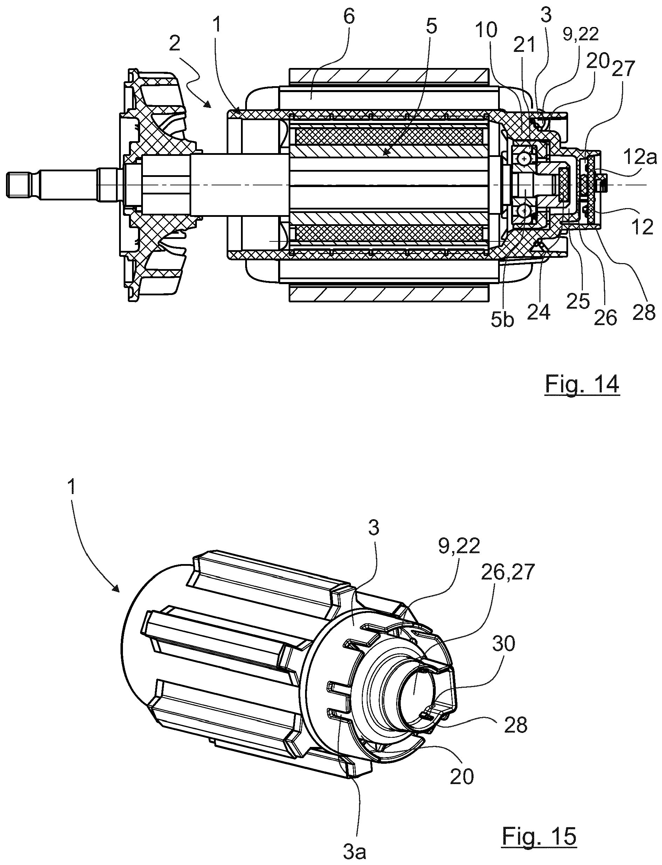

In dem Schnitt von Figur 14 ist erkennbar, dass an der Rotorwelle 5b ein Lagegeber 24 angebracht ist. Zur Aufnahme des Lagegebers 24 schließt sich an die Innenwand 20 eine axiale Erweiterung 25 an. Die axiale Erweiterung 25 ist durch eine Verschlusswand 26 abgeschlossen, die einteilig mit dem Grundkörper 1 ausgebildet ist. Gleichzeitig bildet die Verschlusswand 26 einen Boden eines weiteren Raums 27, in dem im vorliegenden Fall die Leiterplatte 12 mit dem Sensor 12a angeordnet ist. Bei dem Sensor 12a handelt es sich im vorliegenden Fall um einen Lagesensor, der mit dem Lagegeber 24 zusammenarbeitet. Der Raum 27 ist von einer Umfangswand 28 umgeben und an der der Verschlusswand 26 abgewandten Seite geöffnet. Bei der unter Bezugnahme auf die Figuren 1 - 10 beschriebenen Ausführungsform ist der Raum 27 durch eine Endkappe 29 gebildet, die mit dem Grundkörper 1 heißverstemmt, geklipst oder auf andere Art und Weise verbunden werden kann.

In Figur 15 ist zu erkennen, dass die Umfangswand 28 an ihrer Innenseite mehrere Vorsprünge 30 aufweist, mit denen eine Positionierung der Leiterplatte 12 vereinfacht wird.

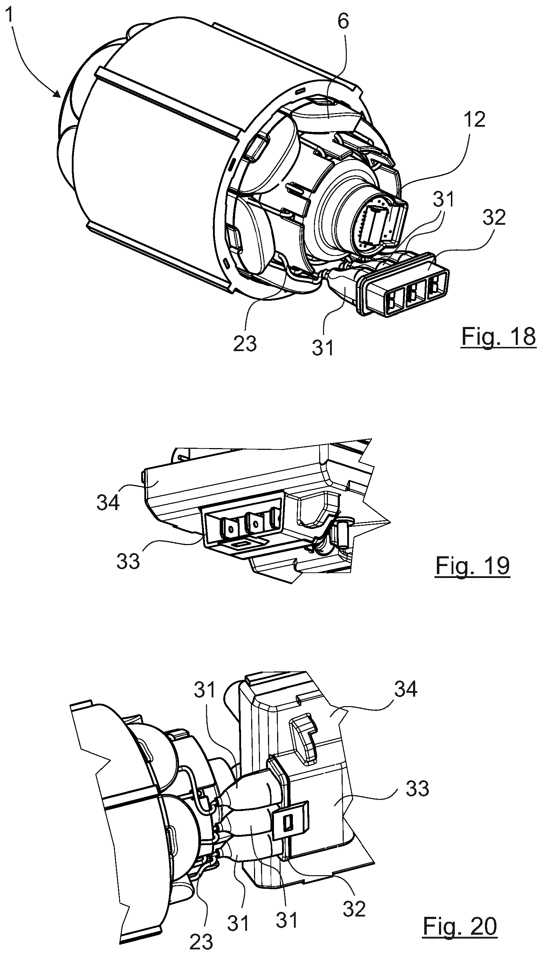

Die Figuren 18 bis 20 zeigen eine weitere Ausgestaltung des Elektromotors 1. Dabei sind die Anschlussdrähte 23, die zur Verschaltung der Wicklung 6 dienen, mit jeweiligen Steckerterminals 31 verbunden, die gemeinsam in einem Steckergehäuse 32 aufgenommen sind. Das Steckergehäuse 32 dient zum Einstecken in eine Steckeraufnahme 33, die direkt an einen Elektronikbecher 34 angeformt ist. In nicht dargestellter Weise sind in der Steckeraufnahme 33 Steckzungen vorgesehen, die mit einer Platine auf ebenfalls nicht dargestellte Weise vergossen sind. Dadurch kann auf das Stecken einzelner Drähte verzichtet werden, da sämtliche Anschlussdrähte 23 der Wicklungen 6 mittels des einen Steckergehäuses 32 mit der in dem Elektronikbecher 34 in nicht dargestellter Weise aufgenommenen Steuerung für den Elektromotor 2 verbunden werden können. Des Weiteren wird auf diese Weise die Staubfestigkeit des Elektromotors 2 mit dessen Steuerung verbessert.

Bei dem Steckergehäuse 32 und der Steckeraufnahme 33 handelt es sich jeweils um Kunststoffbauteile, die auf einfache Weise hergestellt werden können. Im vorliegenden Fall ist das Steckergehäuse 32 mittels einer Schnappverbindung mit der Steckeraufnahme 33 verbunden. In nicht dargestellter Weise kann das Steckergehäuse 31 fest mit dem Grundkörper 1 verbunden sein. Auf diese Weise könnte bei der Montage des Elektromotors 2 gleichzeitig dessen elektrischer Anschluss erfolgen.

## Patentansprüche

1. Grundkörper (1) für einen Elektromotor (2) mit den folgenden Merkmalen:
- einer im Wesentlichen zylindrischen Außenwandung (3), die einen Rotorraum (4) zur Aufnahme eines Rotors (5) zumindest teilweise innerhalb der Außenwandung (3) bildet und an der eine Wicklung (6) zumindest teilweise außerhalb derselben anbringbar ist,
- einem durch die Außenwandung (3) gehaltenen Blechpaket (7),
- einem zur Aufnahme einer Leiterplatte (12) oder eines anderen Bauteils des Elektromotors (2) dienenden, sich an den Rotorraum (4) anschließenden Aufnahmeraum (9),
- einer den Aufnahmeraum (9) gegenüber dem Rotorraum (4) abtrennenden Trennwand (10),
- wenigstens einer Ausrichteinrichtung (13) zur Lageausrichtung der Leiterplatte (12) oder des anderen Bauteils des Elektromotors (2) innerhalb des Aufnahmeraums (9),
- einer sich auf der der Trennwand (10) gegenüberliegenden Seite des Rotorraums (4) an der Außenwandung (3) befindenden Aufnahme (17) für einen den Rotorraum (4) verschließenden Deckel (18),
- einer sich an die Trennwand (10) anschließenden Innenwandung (20) zur Aufnahme eines Lagers (21) für den Rotor (5), die zusammen mit der Außenwandung (3) den Aufnahmeraum (9) erzeugt,
**dadurch gekennzeichnet, dass**
der Aufnahmeraum (9) durch eine umlaufende Vertiefung (22) zwischen der Außenwandung (3) und der Innenwandung (20) gebildet ist und zur Aufnahme von Anschlussdrähten (23) für eine Verschaltung der Wicklung (6) dient.

2. Grundkörper (1) nach Anspruch 1,
**dadurch gekennzeichnet, dass**
die Trennwand (10) eine Öffnung (11) zur Durchführung einer Rotorwelle (5b) aufweist.

3. Grundkörper (1) nach Anspruch 1 oder 2,
**dadurch gekennzeichnet, dass**
das Blechpaket (7) mehrere von der Außenwandung (3) nach außen überstehende Zähne (8) bildet, an denen die Wicklung (6) aufnehmbar ist.

4. Grundkörper (1) nach Anspruch 2,
**dadurch gekennzeichnet, dass**
die Öffnung (11) zur Durchführung des Rotors (5) in der Trennwand (10) einen unrunden Querschnitt aufweist.

5. Grundkörper (1) nach einem der Ansprüche 1 bis 4,
**dadurch gekennzeichnet, dass**
auf der Trennwand (10) wenigstens zwei Stege (14) zur Abstützung der Leiterplatte (12) oder des anderen Bauteils des Elektromotors (2) angeordnet sind.

6. Grundkörper (1) nach Anspruch 5,
**dadurch gekennzeichnet, dass**
die wenigstens eine Ausrichteinrichtung (13) wenigstens einen, auf wenigstens einem der Stege (14) angeordneten Vorsprung (15) zum Eingriff in eine Bohrung (16) der Leiterplatte (12) oder des anderen Bauteils des Elektromotors (2) aufweist.

7. Grundkörper (1) nach einem der Ansprüche 1 bis 6,
**dadurch gekennzeichnet, dass**
die Außenwandung (3) mehrere Aussparungen (3a) zur Durchführung der Wicklung (6) aufweist.

8. Grundkörper (1) nach einem der Ansprüche 1 bis 7,
**dadurch gekennzeichnet, dass**
die Aufnahme (17) für den den Rotorraum (4) verschließenden Deckel (18) als umlaufende Aussparung am inneren Umfang der Außenwandung (3) ausgebildet ist.

9. Grundkörper (1) nach einem der Ansprüche 1 bis 8,
**dadurch gekennzeichnet, dass**
die Aufnahme (17) für den den Rotorraum (4) verschließenden Deckel (18) wenigstens einen Schlitz (19) zur Lageausrichtung des Deckels (18) aufweist.

10. Grundkörper (1) nach einem der Ansprüche 1 bis 9,
**dadurch gekennzeichnet, dass**
auf der dem Rotorraum (4) abgewandten Seite der Trennwand (10) eine axiale Erweiterung (25) für einen Lagegeber (24) vorgesehen ist.

11. Elektromotor (2) mit einem Rotor (5), einer Wicklung (6) und einem Grundkörper (1) nach einem der Ansprüche 1 bis 10.

12. Elektromotor (2) nach Anspruch 11 mit einem Grundkörper (1) nach Anspruch 5,
**dadurch gekennzeichnet, dass**
der wenigstens eine Vorsprung (15) zur Befestigung der Leiterplatte (12) oder des anderen Bauteils des Elektromotors (2) heißverstemmt ist.

13. Elektromotor (2) nach Anspruch 11 oder 12,
**dadurch gekennzeichnet, dass**
für eine Verschaltung der Wicklung (6) dienende Anschlussdrähte (23) über jeweilige Steckerterminals (31) in einem Steckergehäuse (32) aufgenommen sind, wobei das Steckergehäuse (32) mit einer Steckeraufnahme (33) verbindbar ist.

14. Elektromotor (2) nach Anspruch 13,
**dadurch gekennzeichnet, dass**
das Steckergehäuse (32) mittels einer Schnappverbindung mit der Steckeraufnahme (33) verbindbar ist.

## Claims

1. A main body (1) for an electric motor (2) with the following features:
- a substantially cylindrical outer wall (3) which forms a rotor space (4) for receiving a rotor (5) at least partially within the outer wall (3), and to which outer wall (3) a winding (6) can be attached at least partially on the outside thereof,
- a laminated core (7) which is held by way of the outer wall (3),
- a receiving space (9) which adjoins the rotor space (4) and serves to receive a printed circuit board (12) or another component of the electric motor (2),
- a dividing wall (10) which divides the receiving space (9) with respect to the rotor space (4),
- at least one orienting device (13) for the positional orientation of the printed circuit board (12) or the other component of the electric motor (2) within the receiving space (9),
- a receptacle (17), which is situated on the outer wall (3) on that side of the rotor space (4) which lies opposite the dividing wall (10), for a cover (18) which closes the rotor space (4),
- an inner wall (20) which adjoins the dividing wall (10) for receiving a bearing (21) for the rotor (5), which inner wall (20) produces the receiving space (9) together with the outer wall (3),
**characterized in that**
the receiving space (9) is formed by way of a peripheral depression (22) between the outer wall (3) and the inner wall (20), and serves to receive connector wires (23) for the interconnection of the winding (6).

2. The main body (1) as claimed in claim 1,
**characterized in that**
the dividing wall (10) has an opening (11) for leading through a rotor shaft (5b).

3. The main body (1) as claimed in claim 1 or 2,
**characterized in that**
the laminated core (7) forms a plurality of teeth (8) which project to the outside from the outer wall (3) and on which the winding (6) can be received.

4. The main body (1) as claimed in claim 2,
**characterized in that**
the opening (11) for leading through the rotor (5) in the dividing wall (10) has a non-round cross section.

5. The main body (1) as claimed in one of claims 1 to 4,
**characterized in that**
at least two webs (14) for supporting the printed circuit board (12) or the other component of the electric motor (2) are arranged on the dividing wall (10).

6. The main body (1) as claimed in claim 5,
**characterized in that**
the at least one orienting device (13) has at least one projection (15) which is arranged on at least one of the webs (14) for engagement into a bore (16) of the printed circuit board (12) or of the other component of the electric motor (2).

7. The main body (1) as claimed in one of claims 1 to 6,
**characterized in that**
the outer wall (3) has a plurality of cutouts (3a) for leading through the winding (6).

8. The main body (1) as claimed in one of claims 1 to 7,
**characterized in that**
the receptacle (17) for the cover (18) which closes the rotor space (4) is configured as a peripheral cutout on the inner circumference of the outer wall (3).

9. The main body (1) as claimed in one of claims 1 to 8,
**characterized in that**
the receptacle (17) for the cover (18) which closes the rotor space (4) has at least one slot (19) for the positional orientation of the cover (18).

10. The main body (1) as claimed in one of claims 1 to 9,
**characterized in that**
an axial extension (25) for a position transmitter (24) is provided on that side of the dividing wall (10) which faces away from the rotor space (4).

11. An electric motor (2) with a rotor (5), a winding (6) and a main body (1) as claimed in one of claims 1 to 10.

12. The electric motor (2) as claimed in claim 11 with a main body (1) as claimed in claim 5,
**characterized in that**
the at least one projection (15) for fastening the printed circuit board (12) or the other component of the electric motor (2) is staked.

13. The electric motor (2) as claimed in claim 11 or 12,
**characterized in that**
connector wires (23) which serve for the interconnection of the winding (6) are received via respective plug terminals (31) in a plug housing (32), it being possible for the plug housing (32) to be connected to a plug receptacle (33).

14. The electric motor (2) as claimed in claim 13,
**characterized in that**
the plug housing (32) can be connected by means of a snap-in connection to the plug receptacle (33).

## Revendications

1. Corps de base (1) pour un moteur électrique (2) présentant les caractéristiques suivantes :
- une paroi extérieure (3) essentiellement cylindrique qui forme un espace de rotor (4) pour la réception d'un rotor (5) au moins partiellement à l'intérieur de la paroi extérieure (3) et sur laquelle un enroulement (6) peut être monté au moins partiellement à l'extérieur de celle-ci,
- un paquet de tôles (7) tenu par la paroi extérieure (3),
- un espace de réception (9) adjacent à l'espace de rotor (4) et servant à la réception d'une carte de circuit imprimé (12) ou d'un autre composant du moteur électrique (2),
- une paroi de séparation (10) séparant l'espace de réception (9) par rapport à l'espace de rotor (4),
- au moins un dispositif d'alignement (13) pour l'alignement de position de la carte de circuit imprimé (12) ou de l'autre composant du moteur électrique (2) à l'intérieur de l'espace de réception (9),
- une réception (17) située sur la paroi extérieure (3) de l'espace de rotor (4) sur le côté opposé à la paroi de séparation (10), pour un couvercle (18) fermant l'espace de rotor (4),
- une paroi intérieure (20) adjacente à la paroi de séparation (10) pour la réception d'un palier (21) pour le rotor (5), qui crée l'espace de réception (9) ensemble avec la paroi extérieure (3),
**caractérisé en ce que** l'espace de réception (9) est formé par un renfoncement périphérique (22) entre la paroi extérieure (3) et la paroi intérieure (20) et sert à la réception des fils de raccordement (23) pour le câblage de l'enroulement (6).

2. Corps de base (1) selon la revendication 1, **caractérisé en ce que** la paroi de séparation (10) présente une ouverture (11) pour le passage d'un arbre de rotor (5b).

3. Corps de base (1) selon la revendication 1 ou 2, **caractérisé en ce que** le paquet de tôles (7) forme plusieurs dents (8) dépassant vers l'extérieur de la paroi extérieure (3), sur lesquelles l'enroulement (6) peut être logé.

4. Corps de base (1) selon la revendication 2, **caractérisé en ce que** l'ouverture (11) destinée au passage du rotor (5) dans la paroi de séparation (10) présente une section transversale non circulaire.

5. Corps de base (1) selon l'une des revendications 1 à 4, **caractérisé en ce que** au moins deux nervures (14) sont disposées sur la paroi de séparation (10) pour soutenir la carte de circuit imprimé (12) ou l'autre composant du moteur électrique (2).

6. Corps de base (1) selon la revendication 5, **caractérisé en ce que** le au moins un dispositif d'alignement (13) comporte au moins une saillie (15) disposée sur au moins une des nervures (14) pour s'engager dans un alésage (16) de la carte de circuit imprimé (12) ou de l'autre composant du moteur électrique (2).

7. Corps de base (1) selon l'une des revendications 1 à 6, **caractérisé en ce que** la paroi extérieure (3) comporte plusieurs évidements (3a) pour le passage de l'enroulement (6).

8. Corps de base (1) selon l'une des revendications 1 à 7, **caractérisé en ce que** la réception (17) pour le couvercle (18) fermant l'espace rotor (4) est réalisé sous la forme d'un évidement périphérique sur le pourtour intérieur de la paroi extérieure (3).

9. Corps de base (1) selon l'une des revendications 1 à 8, **caractérisé en ce que** le logement (17) pour le couvercle (18) fermant l'espace de rotor (4) présente au moins une fente (19) pour l'alignement du couvercle (18).

10. Corps de base (1) selon l'une des revendications 1 à 9, **caractérisé en ce que** un élargissement axial (25) pour un capteur de position (24) est prévu sur le côté de la paroi de séparation (10) opposé à l'espace de rotor (4).

11. Moteur électrique (2) avec un rotor (5), un enroulement (6) et un corps de base (1) selon l'une des revendications 1 à 10.

12. Moteur électrique (2) selon la revendication 11 avec un corps de base (1) selon la revendication 5, **caractérisé en ce que** la au moins une saillie (15) destinée à la fixation de la carte de circuit imprimé (12) ou de l'autre composant du moteur électrique (2) est sertie à chaud.

13. Moteur électrique (2) selon la revendication 11 ou 12, **caractérisé en ce que** les fils de raccordement (23) servant au câblage de l'enroulement (6) sont logés dans un boîtier de connecteur (32) via des bornes de connecteur (31) respectives, le boîtier de connecteur (32) pouvant être relié à un logement de connecteur (33).

14. Moteur électrique (2) selon la revendication 13, **caractérisé en ce que** le boîtier de connecteur (32) peut être relié au logement de connecteur (33) au moyen d'une connexion à encliquetage.
